# EUROPÄISCHE PATENTSCHRIFT

(11) **EP 1 572 810 B1**
(45) Veröffentlichungstag und Bekanntmachung des Hinweises auf die Patenterteilung: **02.07.2008**
(21) Anmeldenummer: 03785732.3
(22) Anmeldetag: 04.12.2003
(51) Int. Cl.: C09B 67/20, C09B 67/22, C09D 11/02

(54) **PHTHALOCYANINPIGMENTZUBEREITUNGEN**
PHTHALOCYANINE PIGMENT PREPARATIONS
PREPARATIONS DE PIGMENT DE PHTALOCYANINE

(30) Priorität: 10.12.2002 DE 10257498
(43) Veröffentlichungstag der Anmeldung: 14.09.2005
(73) Patentinhaber: Clariant Produkte (Deutschland) GmbH, 65929 Frankfurt am Main (DE)
(72) Erfinder: BRYCHCY, Klaus, 60488 Frankfurt am Main (DE); WEBER, Joachim, 4153 Reinach (CH)
(86) Internationale Anmeldenummer: PCT/EP2003/013690
(87) Internationale Veröffentlichungsnummer: WO 2004/052997

(56) Entgegenhaltungen:
- EP-A- 0 638 615
- EP-A- 0 761 770
- US-A- 4 313 766
- US-A- 5 296 034

## Beschreibung

Die Erfindung betrifft neue Pigmentzubereitungen auf Basis eines Kupferphthalocyaninpigments und ihre Verwendung zum Färben von hochmolekularen Materialien.

Beim Einsatz von Pigmenten zum Herstellen von Druckfarbensystemen werden hohe Anforderungen an die anwendungstechnischen Eigenschaften der Pigmente gestellt, wie leichte Dispergierbarkeit, anwendungsgerechte Fließfähigkeit der Druckfarben, hohe Transparenz, Glanz, Farbstärke und Reinheit des Farbtons. Außerdem ist eine möglichst universelle Einsetzbarkeit zum Färben von anderen hochmolekularen Systemen, wie beispielsweise von Lacken oder Kunststoffen wünschenswert. Hier kommen weitere teilweise auch an Druckfarben gestellte Anforderungen hinzu, wie beispielsweise hohe Echtheiten wie Ausblutechtheit, Überlackierechtheit, Lösemittelechtheit, Licht- und Wetterechtheiten. Sowohl bei Druckfarben als auch bei Lacken wird die Einsetzbarkeit sowohl in wasser- als auch in lösemittelbasierenden Systemen gewünscht. Bei Lackierungen sind neben hochtransparenten Pigmenten, besonders für Metalliceinfärbungen, auch deckende Pigmente gefordert. Im Falle von Lacken ist die Möglichkeit gewünscht, hochpigmentierte Lackkonzentrate (Millbase) mit dennoch niedriger Viskosität herstellen zu können, ebenso geht der Trend bei den Anreibeformulierungen von Druckfarben hin zu hohen Pigmentierungskonzentrationen.

Die Synthese der Phthalocyanine ist seit langem bekannt. Die bei der Synthese grobkristallin anfallenden Phthalocyanine, im folgenden Rohpigmente genannt, können ohne Zerkleinerung wegen ihrer ungenügenden anwendungstechnischen Eigenschaften nicht zum Färben von hochmolekularen Materialien verwendet werden.

Es sind verschiedene Verfahren vorgeschlagen worden, wie ein Phthalocyaninpigment hergestellt werden kann. Prinzipiell müssen dazu die grobkristallinen Rohpigmente zerkleinert werden, beispielsweise durch Acidpasting, Acidswelling, Trocken- oder Nassmahlung. Die erhaltenen Produkte, im folgenden Präpigmente genannt, sind meist von schlechter Kristallqualität, sind agglomeriert und zeigen noch nicht die gewünschten anwendungstechnischen Eigenschaften. Zum Erzielen optimaler Anwendbarkeit wird eine Nachbehandlung, im allgemeinen als Finish bezeichnet, durchgeführt, beispielsweise in Lösemitteln und unter Zusatz oberflächenaktiver Mittel. Dabei wird zur Verbesserung der anwendungstechnischen Eigenschaften auch die Herstellung von Pigmentzubereitungen durch Einsatz von mit Sulfonsäuregruppen substituierten Phthalocyaninen vorgeschlagen.

Die DE 27 20 464 offenbart ein Verfahren, bei dem ein Phthalocyaninpigment einer Lösemittelbehandlung in Gegenwart eines Phthalocyaninsulfonsäuresalzes unterzogen wird.

Die EP 761 770 offenbart ein Verfahren zur Herstellung von Phthalocyaninpigmenten, bei dem das Phthalocyaninsulfonsäuresalz nach dem Finish in wässriger Suspension zugegeben wird.

Die nach diesen Verfahren hergestellten Pigmente genügen nicht immer allen oben beschriebenen Anforderungen. Insbesondere bestand ein Bedarf an hochpigmentierten kupferphthalocyaninhaltigen Druckfarben mit niedriger Viskosität bei gleichzeitig hoher Transparenz, hoher Farbstärke und hohem Glanz.

Gegenstand der Erfindung sind Kupferphthalocyanin-Pigmentzubereitungen, enthaltend ein Kupferphthalocyaninpigment und mindestens einen Pigmentdispergator aus der Gruppe der Kupferphthalocyaninsulfonsäuren und Kupferphthalocyaninsulfonsäuresalze, gekennzeichnet durch
a) eine dynamische Viskosität von höchstens 180 mPas, vorzugsweise von höchstens 165 mPas, insbesondere von höchstens 150 mPas, und/oder durch eine Thixotropie von höchstens 800 Pa/s, vorzugsweise von höchstens 600 Pa/s, insbesondere von höchstens 450 Pa/s, wobei die dynamische Viskosität und die Thixotropie mit einem Rotationsviskosimeter bei einer Temperatur von 23°C in einer Pigmentdispersion, bestehend aus 28 Gew.-% der Kupferphthalocyanin-Pigmentzubereitung (trocken), 9 Gew.-% Nitrocellulose (nach ISO 14 446, Norm 27A), 62,3 Gew.-% Ethanol und 0,7 Gew.-% Ethylacetat, bestimmt wird,
   und gekennzeichnet durch
b) eine Farbstärke, die so hoch ist, dass eine Druckfarbe, bestehend aus einem Ethanol/Nitrocellulose-Tiefdruckfirnis (enthaltend 75 bis 85 Gew.-% Ethanol und 9 bis 11 Gew.-% Nitrocellulose nach ISO 14 446, Norm 27A und 30A im Verhältnis 2 zu 7,5) und einem Gehalt an Kupferphthalocyanin-Pigmentzubereitung (trocken), bezogen auf das Gesamtgewicht der Druckfarbe, von höchstens 6,6 Gew.-%, vorzugsweise höchstens 6,5 Gew.-% und insbesondere höchstens 6,4 Gew.-%, die 1/3-Standardfarbtiefe nach DIN 53235 des entsprechenden Farbtones erreicht.

Unter entsprechendem Farbton wird der Farbton verstanden, dessen Bunttonwinkel am nächsten dem Bunttonwinkel der erfindungsgemäßen Pigmentzubereitung liegt.

Die vorstehend erwähnte zur Bestimmung der Viskosität, Thixotropie und 1/3 Standardfarbtiefe verwendete Pigmentdispersion, bestehend aus erfindungsgemäßer Kupferphthalocyanin-Pigmentzubereitung und EthanolNitrocellulose-Tiefdruckfirnis, wurde zur Erreichung einer ausreichenden Dispergierung für 45 Minuten bei einer Temperatur von 20°C bis höchstens 40°C mit Hilfe eines Dispersers mit ellipsenförmigen Schüttelbewegungen dispergiert.

Die Druckfarbe zur Bestimmung der 1/3 Standardfarbtiefe wird beispielsweise mit Hilfe einer Tiefdruckprobedruckmaschine und einem entsprechenden Klischee mit 70 % Flächendeckung und einer Farbübertragung von 11,8 ml/m² und einem einseitig gestrichenen Papier für Verpackungen (80g/m²) verdruckt.

Eine dynamische Viskosität von 0,0 mPas ist in der Praxis nicht zu erreichen, die Mindestviskosität ist daher üblicherweise größer als 0,1 mPas. Die Thixotropiewerte sollten möglichst klein, idealerweise gleich Null Pa/s sein.

Die Kupferphthalocyanine in den erfindungsgemäßen Pigmentzubereitungen liegen überwiegend in der beta Phase vor. Sie können geringe Chlorgehalte haben, diese dürfen jedoch nicht zu hoch sein, da sonst die alpha-Phase dominiert.

Die erfindungsgemäß eingesetzten Pigmentdispergatoren entsprechen vorzugsweise der allgemeinen Formel (I), 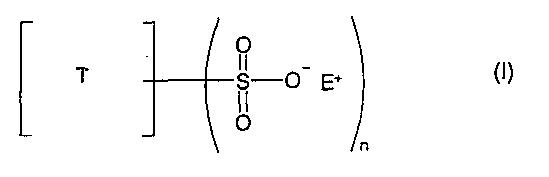 worin
- T: einen Kupferphthalocyaninrest darstellt, der mit 1 bis 4 Chloratomen substituiert oder vorzugsweise chlorfrei ist;
- n: eine Zahl von 1 bis 4 darstellt;
- E⁺: H⁺ oder das Äquivalent M^{s+}/s eines Metallkations M^{s+}, vorzugsweise aus der 1. bis 5. Hauptgruppe oder aus der 1. oder 2. oder der 4. bis 8. Nebengruppe des Periodensystems der chemischen Elemente bezeichnet, wobei s eine der Zahlen 1, 2 oder 3 ist, wie beispielsweise Li¹⁺, Na¹⁺, K¹⁺, Mg²⁺, Ca²⁺, Sr²⁺, Ba²⁺, Mn²⁺, Cu²⁺, Ni²⁺, Co²⁺, Zn²⁺, Fe²⁺, Al³⁺, Cr³⁺ oder Fe³⁺
bedeutet.

Von besonderem Interesse sind Pigmentdispergatoren der Formel (I), worin T einen unchlorierten Kupferphthalocyaninrest darstellt.

Von Interesse sind Pigmentdispergatoren der Formel (I) mit n gleich 1, 2 oder 3, insbesondere 1 oder 2.

Von besonderen Interesse sind weiterhin Pigmentdispergatoren der Formel (I), bei denen E⁺ die Bedeutung H⁺ hat; oder wobei im Falle des Äquivalents M^{s+}/s das Metallkation M^{s+} die Bedeutung Na⁺, K⁺, Ca²⁺, Mg²⁺, Sr²⁺, Ba²⁺, Mn²⁺ oder Al³⁺ hat, insbesondere H⁺ und Na⁺.

Die Pigmentdispergatoren sind zweckmäßigerweise in einer Gesamtmenge von 0,1 bis 25 Gew.-%, vorzugsweise 0,5 bis 20 Gew.-%, insbesondere 1 bis 17,5 Gew.-%, bezogen auf das Gewicht des Kupferphthalocyaninpigments, enthalten.

Die erfindungsgemäßen Kupferphthalocyanin-Pigmentzubereitungen können hergestellt werden, indem ein Kupferphthalocyanin-Rohpigment durch ein Verfahren aus der Gruppe Trockenmahlung und Salzknetung unter Bildung eines Präpigments feinverteilt wird und dann das Präpigment einer Finish-Behandlung, in einer Mischung aus Wasser und einem organischen Lösemittel bei alkalischem pH, bei erhöhter Temperatur und in Gegenwart mindestens eines Pigmentdispergators aus der Gruppe der Kupferphthalocyaninsulfonsäuren und Kupferphthalocyaninsulfonsäuresalze unterzogen wird.

Die Kupferphthalocyaninsulfonsäuresalze können in situ hergestellt werden, beispielsweise durch Zugabe der Kupferphthalocyaninsulfonsäuren und der das salzbildende Gegenion enthaltenden Substanz zu einer Suspension des Präpigments. Sie können auch separat hergestellt werden, beispielsweise durch Vereinigen der zugrunde liegenden Kupferphthalocyaninsulfonsäure mit der das salzbildende Gegenion enthaltenden Substanz, in wässrigem oder organischem Lösemittel, gegebenenfalls mit Isolation. Sie können auch bereits während der Herstellung der zugrundeliegenden sauren Pigmentdispergatoren gebildet werden. Die Zugabe der freien Säuren der Pigmentdispergatoren und der die salzbildenden Gegenionen enthaltenden Substanzen kann auch zu unterschiedlichen Zeitpunkten im Verfahren erfolgen.

Die erfindungsgemäß eingesetzten Pigmentdispergatoren können an irgendeiner Stufe des Verfahrens eingesetzt werden mit der Maßgabe, dass die Zugabe vor dem Finish geschieht. Werden sie erst während des Finishs zugesetzt, müssen sie mindestens 5 Minuten während des Finishs anwesend sein. Sie können daher auch bereits zur Synthese des Kupferphthalocyanin-Rohpigments zugesetzt oder bei der Synthese des Rohpigments gleichzeitig gebildet werden. Auch eine Zugabe vor der Mahlung oder der Salzknetung ist denkbar. Bevorzugt werden sie unmittelbar vor dem Finish zugesetzt.
Nach dem Finish kann der pH wieder gesenkt werden. Beispielsweise kann die Bildung von Salzen bei einem sauren pH, beispielsweise bei pH 3 bis 6 begünstigt sein.

Das direkt nach der Synthese vorliegende Kupferphthalocyanin-Rohpigment enthält meist noch bis zu ca. 35 Gew.-% bei der Synthese entstandener Salze. Gewöhnlicherweise werden diese aus der Synthese stammenden Salze durch einen alkalischen und/oder sauren wässrigen Auszug entfernt. Im erfindungsgemäßen Verfahren kann sowohl das synthesesalzhaltige als auch das vom Synthesesalz gereinigte Rohpigment eingesetzt werden.

Die Trockenmahlung erfolgt mit oder ohne Mahlhilfsmittel. Als Mahlhilfsmittel kommen Alkalimetall- oder Erdalkalimetallsalze von anorganischen Säuren, beispielsweise Salzsäure oder Schwefelsäure, oder von organischen Säuren mit 1 bis 4 Kohlenstoffatomen, beispielsweise Ameisensäure und Essigsäure, in Frage. Bevorzugte Salze sind Natriumformiat, Natriumacetat, Calciumacetat, Natriumchlorid, Kaliumchlorid, Calciumchlorid, Natriumsulfat, Aluminiumsulfat oder Mischungen dieser Salze. Die Mahlhilfsmittel können in beliebiger Menge eingesetzt werden, beispielsweise in bis zur 5-fachen Menge, bezogen auf das Gewicht des Rohpigments. Auch größere Mengen können eingesetzt werden, sind jedoch unwirtschaftlich.
Bei der Trockenmahlung können organische Flüssigkeiten in solchen Mengen, z.B. bis zu 15 Gew.-%, vorzugsweise bis zu 10 Gew.-%, bezogen auf Mahlgut, zum Einsatz kommen, dass das Mahlgut noch eine rieselfähige Konsistenz beibehält. Beispiele für solche Flüssigkeiten sind Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Di-, Tri- oder Tetraethylenglykol, Propylenglykol, Di-, Tri- oder Tetrapropylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykol-monoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; Ketone, wie Aceton, Diethylketon, Methylisobutylketon, Methylethylketon oder Cyclohexanon; eine mono-, bis oder tris-Hydroxy-C₂-C₁₂-alkan-Verbindung, die 1 oder 2 Ketogruppen enthält und bei der eine oder mehr Hydroxylgruppen mit einem C₁-C₈-Alkylrest verethert oder mit einem C₁-C₈-Alkylcarbonylrest verestert sein kann; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäuredi- oder Benzoesäurealkylester, wie Benzoesäure-C₁-C₄-alkylester oder C₁-C₁₂-Alkylphthalsäurediester; cyclische Ester, wie Caprolacton; Nitrile, wie Acetonitril, aliphatische oder aromatische Amine, wie beispielsweise Dimethylanilin oder Diethylanilin; gegebenenfalls halogenierte aliphatische Kohlenwasserstoffe oder aromatische Kohlenwasserstoffe wie Benzin, Pinen, Tetrachlorkohlenstoff, Tri- oder Tetrachlorethylen, Tetrachlorethane, Benzol oder durch Alkyl, Alkoxy, Nitro, Cyano oder Halogen substituiertes Benzol, beispielsweise Toluol, Xylole, Ethylbenzol, Anisol, Nitrobenzol, Chlorbenzol, Dichlorbenzole, Trichlorbenzole, Benzonitril oder Brombenzol; oder andere substituierte Aromaten, wie Phenole, Aminophenole, Kresole, Nitrophenole, Phenoxyethanol oder 2-Phenylethanol; aromatische Heterocyclen, wie Pyridin, Morpholin, Picolin oder Chinolin; 1,3-Dimetyl-2-imidazolidinon; Sulfone und Sulfoxide, wie Dimethylsulfoxid und Sulfolan; sowie Mischungen dieser organischen Flüssigkeiten. Bevorzugt werden solche eingesetzt, die kristallisierende und/oder Phasen-bestimmende Eigenschaften haben. Bevorzugt werden Glykole und Glykolether, wie Ethylenglykol, Diethylenglykol oder Butylglykol, Amine, wie beispielsweise Anilin, Diethylanilin, Dimethylanilin, n-Butylamin, o-Toluidin oder Talgfettpropylendiamin, Diacetonalkohol, Dimethylformamid, N-Methylpyrrolidon, Triethanolamin, Toluol, Xylol, Cumen, Mesitylen oder Octylbenzol verwendet.

Bei der Trockenmahlung können des weiteren auch Säuren in solchen Mengen, z.B. bis zu 15 Gew.-%, bevorzugt bis zu 10 Gew.-%, bezogen auf Mahlgut, zum Einsatz kommen, dass das Mahlgut seine rieselfähige Konsistenz behält. Es können die aus der Literatur bekannten Säuren eingesetzt werden, beispielsweise die in der DE 28 51 752 oder in der EP 780 446 angeführten Säuren. Bevorzugt wird Phosphorsäure, Ameisensäure, Essigsäure, Methansulfonsäure, Dodecylbenzolsulfonsäure und insbesondere Schwefelsäure eingesetzt.

Die Trockenmahlung kann in bekannter Weise auf diskontinuierlichen oder kontinuierlichen Roll- oder Schwingmühlen erfolgen. Als Mahlkörper kommen alle in der Literatur bekannten in Betracht, beispielsweise Kugeln, Zylinder oder Stangen und als Materialien Stahl, Porzellan, Steatit, Oxide, wie z.B. Aluminiumoxid oder gegebenenfalls stabilisiertes Zirkonoxid, Mischoxide, wie z.B. Zirkonmischoxid, oder Glas, wie z.B. Quarzglas. Die Mahlung kann bei Temperaturen bis zu 200°C stattfinden, gewöhnlicherweise werden jedoch Temperaturen unter 100°C angewendet. Die Verweilzeit in der Mühle richtet sich nach der gewünschten Anforderung und nach der Qualität des eingesetzten Rohpigments und hängt außerdem erheblich vom Mahlaggregat und von Form und Material der eingesetzten Mahlkörper ab. Sie kann beispielsweise bei Schwingmahlung zwischen 15 Minuten und 25 Stunden, zweckmäßigerweise zwischen 30 Minuten und 15 Stunden, vorzugsweise zwischen 30 Minuten und 9 Stunden, bei Rollmahlung zwischen 5 und 100 Stunden, zweckmäßigerweise zwischen 8 und 50 Stunden, bevorzugt zwischen 10 und 30 Stunden, betragen.

Wenn Mahlhilfsmittel, organische Flüssigkeiten oder Säuren bei der Trockenmahlung eingesetzt wurden, können diese vor der Lösemittelbehandlung entfernt werden. Dies empfiehlt sich besonders bei Einsatz größerer Mengen an Mahlhilfsmitteln. Dazu wird das Mahlgut mit Wasser zu einer wässrigen Suspension angerührt, die Zusatzstoffe gelöst und durch Filtration vom Präpigment getrennt. Bewährt hat sich bei dieser Behandlung das Einstellen eines sauren pH durch Zugabe von Säure, beispielsweise Salzsäure oder Schwefelsäure. Es kann auch ein alkalischer pH gewählt werden, z.B. um eine eingesetzte Säure zu lösen. Es kann auf eine Entfernung auch verzichtet werden, besonders bei Einsatz geringer Mengen Mahlhilfsmittel, organischer Flüssigkeiten oder Säuren. Diese können auch durch das beim Finish eingesetzte Wasser gelöst werden bzw. durch eine entsprechende Menge Base neutralisiert werden.

Die Salzknetung kann in einer aus der Literatur bekannten Art und Weise erfolgen. Dazu wird das Rohpigment mit einer organischen Flüssigkeit und mit Salz in Form einer knetbaren, hochviskosen Paste geknetet. Als Salze und als organische Flüssigkeiten können die gleichen wie die bei der Trockenmahlung erwähnten eingesetzt werden. Die Temperatur bei der Knetung soll über dem Schmelzpunkt und unter dem Siedepunkt der organischen Flüssigkeit liegen.
Auch bei der Salzknetung können die oben erwähnten Säuren eingesetzt werden. Als Kneter kommen die bekannten kontinuierlichen und diskontinuierlichen Kneter in Betracht, bevorzugt werden zweiarmige diskontinuierliche Kneter eingesetzt. Bei der Salzknetung werden meist größere Mengen Salz und organische Flüssigkeit eingesetzt, so dass deren Entfernung vor dem Finish durch beispielsweise einen wässrigen Auszug bei saurem pH üblich ist.

Das bevorzugte Feinverteilungsverfahren ist die Trockenmahlung.

Das durch das gewählte Feinverteilungsverfahren gebildete Präpigment kann in trockener Form oder als Presskuchen beim Finish eingesetzt werden, bevorzugt wird es als wässrig-feuchter Presskuchen eingesetzt.

Das zum Finish eingesetzte Lösemittelsystem besteht aus Wasser, organischem Lösemittel und einer zum Einstellen eines alkalischen pH erforderlichen Menge einer Base.

Als organisches Lösemittel kommen in Frage: Alkohole mit 1 bis 10 C-Atomen, wie beispielsweise Methanol, Ethanol, n-Propanol, Isopropanol, Butanole, wie n-Butanol, iso-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, Sorbitol oder Glycerin; Polyglykole, wie Polyethylen- oder Polypropylenglykole; Ether, wie Methylisobutylether, Tetrahydrofuran, Dimethoxyethan oder Dioxan; Glykolether, wie Monoalkylether des Ethylen- oder Propylenglykols oder Diethylenglykol-monoalkylether, wobei Alkyl für Methyl, Ethyl, Propyl, und Butyl stehen kann, beispielsweise Butylglykole oder Methoxybutanol; Polyethylenglykolmonomethylether, insbesondere solche mit einer mittleren molaren Masse von 350 bis 550 g/mol, und Polyethylenglykoldimethylether, insbesondere solche mit einer mittleren molaren Masse von 250 bis 500 g/mol; Ketone, wie Aceton, Diethylketon, Methylisobutylketon, Methylethylketon, Methylisobutylketon oder Cyclohexanon; eine mono-, bis oder tris-Hydroxy-C₂-C₁₂-alkan-Verbindung, die 1 oder 2 Ketogruppen enthält und bei der eine oder mehr Hydroxylgruppen mit einem C₁-C₈-Alkylrest verethert oder mit einem C₁-C₈-Alkylcarbonylrest verestert sein kann; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Nitrile, wie Acetonitril, aliphatische oder aromatische Amine, wie beispielsweise n-Butylamin, gegebenenfalls halogenierte aliphatische Kohlenwasserstoffe oder aromatische Kohlenwasserstoffe wie Cyclohexan, Methylcyclohexan, Methylenchlorid, Tetrachlorkohlenstoff, Di-, Tri- oder Tetrachlorethylen, Di- oder Tetrachlorethane oder wie Benzol oder durch Alkyl, Alkoxy, Nitro, Cyano oder Halogen substituiertes Benzol, beispielsweise Toluol, Xylole, Mesitylen, Ethylbenzol, Anisol, Nitrobenzol, Chlorbenzol, Dichlorbenzole, Trichlorbenzole, Benzonitril oder Brombenzol; oder andere substituierte Aromaten, wie Phenole, Kresole, Nitrophenole, wie beispielsweise o-Nitrophenol, Phenoxyethanol oder 2-Phenylethanol; aromatische Heterocyclen, wie Pyridin, Morpholin, Picolin oder Chinolin; 1,3-Dimetyl-2-imidazolidinon; Sulfone und Sulfoxide, wie Dimethylsulfoxid und Sulfolan; sowie Mischungen dieser organischen Lösemittel.
Bevorzugt werden solche Lösemittel eingesetzt, die kristallisierende und/oder Phasen-bestimmende Eigenschaften haben.
Bevorzugte Lösemittel sind C₁-C₆-Alkohole, insbesondere Methanol, Ethanol, n- und Isopropanol, Isobutanol, n- und tert.-Butanol und tert.-Amylalkohol; C₃-C₆-Ketone, insbesondere Aceton, Methylethylketon oder Diethylketon; Tetrahydrofuran, Dioxan, Ethylenglykol, Diethylenglykol oder Ethylenglykol-C₃-C₅-alkylether, insbesondere 2-Methoxyethanol, 2-Ethoxyethanol, Butylglykol, Toluol, Xylol, Ethylbenzol, Chlorbenzol, o-Dichlorbenzol, Nitrobenzol, Cyclohexan, Diacetonalkohol oder Methylcyclohexan.

Um einen alkalischen pH einzustellen, werden als Basen bevorzugt Alkali- und/oder Erdalkalihydroxide, ggf. in Form ihrer wässrigen Lösungen, wie Natrium- oder Kaliumhydroxid verwendet. Denkbar sind auch stickstoffhaltige Basen, wie z.B. Ammoniak oder Methylamin.

Um den gewünschten Effekt zu erzielen, ist ein pH von größer oder gleich 9,0 vorteilhaft, bevorzugt pH größer oder gleich 10, insbesondere pH größer oder gleich 10,5. Gewöhnlich wird bei einem pH größer oder gleich 11,0 gearbeitet. Die Base kann auch in großen Mengen von bis zu 20 Gew.-%, bevorzugt bis zu 15 Gew.-%, insbesondere bis zu 10 Gew.-%, bezogen auf die Menge an Wasser, eingesetzt werden.

Das Gewichtsverhältnis Wasser zu organischem Lösemittel beträgt 5 zu 95 bis 95 zu 5, bevorzugt 7,5 zu 92,5 bis 92,5 zu 7,5, insbesondere 10 zu 90 bis 90 zu 10 und besonders bevorzugt 20 zu 80 bis 80 zu 20.
Die Gesamtmenge Wasser und organisches Lösemittel liegt im Bereich von 0,5 bis 40, bevorzugt von 1 bis 20, insbesondere von 2 bis 15, Gewichtsteilen pro Gewichtsteil Pigment.

Das Lösemittelsystem kann ein- oder zweiphasig vorliegen. Bevorzugt werden solche organischen Lösemittel eingesetzt, die mit Wasser nicht vollständig mischbar sind, und der Finish wird bevorzugt in einem zweiphasigen Lösemittelsystem mit einer wässrigen und einer organischen Phase durchgeführt.

Der Finish im erfindungsgemäßen Verfahren kann bei einer Temperatur von 50 bis 250°C, besonders 70 bis 200°C, insbesondere 100 bis 190°C, und zweckmäßigerweise für eine Zeit von 5 Minuten bis 24 Stunden, besonders 5 Minuten bis 18 Stunden, insbesondere 5 Minuten bis 12 Stunden, durchgeführt werden. Bevorzugt wird der Finish bei Siedetemperatur, insbesondere bei Temperaturen oberhalb des Siedepunktes des Lösemittelsystems unter Druck durchgeführt.

Bei organischen Lösemitteln, die durch Wasserdampfdestillation von der wässrigen Phase getrennt werden können, bietet es sich an, diese auf diese Weise vor Isolation der Pigmentzubereitung zu entfernen, besonders wenn eine Wiedergewinnung des eingesetzten Lösemittels gewünscht ist.

Die erfindungsgemäßen Pigmentzubereitungen können mit den üblichen Methoden isoliert werden, beispielsweise durch Filtrieren, Dekantieren oder Zentrifugieren. Lösemittel können auch durch Waschen entfernt werden. Die Pigmentzubereitungen können als vorzugsweise wässrige Presskuchen zum Einsatz kommen, in der Regel handelt es sich jedoch um getrocknete, feste Systeme von rieselfähiger, pulverförmiger Beschaffenheit oder um Granulate.

Bei der Herstellung der Pigmentzubereitungen können Hilfsmittel eingesetzt werden, wie beispielsweise weitere Tenside, weitere nichtpigmentäre und pigmentäre Dispergiermittel, Füllstoffe, Stellmittel, Harze, Wachse, Entschäumer, Antistatika, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon.
Die Hilfsmittel können an beliebiger Stelle des Verfahrens zugegeben werden, beispielsweise bereits vor der Feinverteilung, vor dem Finish oder erst nach dem Finish oder auch durch Mischen in trockenem Zustand.

Als Tenside kommen anionische oder anionaktive, kationische oder kationaktive und nichtionische oder amphotere Substanzen oder Mischungen dieser Mittel in Betracht.
Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Bevorzugt sind Harzseifen, d.h. Alkalisalze von Harzsäuren.
Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.
Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkoholalkylenoxid-Addukte und Alkylphenolpolyglykolether in Betracht.

Es ist auch möglich, den Finish in einer Emulsion aus Wasser, Tensid und organischem Lösemittel durchzuführen.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse^{®}, Avecia; Disperbyk^{®}, Byk-Chemie, Efka^{®}, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermitteln sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalin oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäure-, Sulfonamid- oder Sulfosäureestergruppen haltige Pigmentdispergatoren, Ether- oder Thioethergruppen haltige Pigmentdispergatoren, oder Carbonsäure-, Carbonsäureester- oder Carbonamidgruppen haltige Pigmentdispergatoren.
Als weitere Pigmentdispergatoren sind insbesondere solche auf Basis von Kupferphthalocyanin der allgemeinen Formel (II) gemeint, 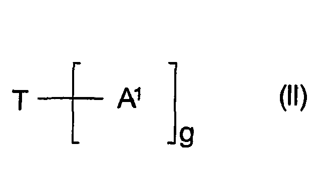 in welcher
- T: die vorstehend genannte Bedeutung hat,
- g: eine Zahl von 1 bis 4, insbesondere 1 oder 2, bedeutet, und
- A¹: eine Gruppe der Formel (IIa) 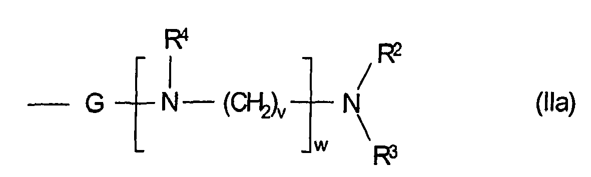
darstellt, worin
- G: eine bivalente Gruppe -CO- oder -SO₂- bedeutet,
- R² und R³: unabhängig voneinander ein Wasserstoffatom, eine substituierte oder unsubstituierte, oder teil- oder perfluorierte, verzweigte oder unverzweigte C₁-C₂₀-Alkylgruppe, eine substituierte oder unsubstituierte C₅-C₈-Cycloalkylgruppe oder eine substituierte oder unsubstituierte, oder teil- oder perfluorierte C₂-C₂₀-Alkenylgruppe darstellen, wobei die Substituenten Hydroxy, Phenyl, Cyano, Chlor, Brom, Amino, C₂-C₄-Acyl oder C₁-C₄-Alkoxy sein und vorzugsweise 1 bis 4 an der Zahl sein können, oder worin
- NR²R³: einen gesättigten, ungesättigten oder aromatischen heterocyclischen 5- bis 7-gliedrigen Ring bildet, der gegebenenfalls 1 oder 2 weitere Stickstoff-, Sauerstoff- oder Schwefelatome oder Carbonylgruppen im Ring enthält, gegebenenfalls durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert ist, und der gegebenenfalls 1 oder 2 benzoannellierte gesättigte, ungesättigte oder aromatische, carbocyclische oder heterocyclische Ringe trägt;
und R² und R³ vorzugsweise Wasserstoff oder C₁-C₄-Alkyl bedeuten,
- R⁴: Wasserstoff, C₁-C₄-Alkyl, vorzugsweise Wasserstoff oder Methyl,
- v: eine Zahl von 1 bis 6, vorzugsweise 2 oder 3,
- w: eine Zahl 0 oder 1, vorzugsweise 1, bedeutet;
oder in welcher
- T: die vorstehend genannte Bedeutung hat,
- g: eine Zahl von 1 bis 6 bedeutet, vorzugsweise 1 bis 4, und
- A¹: eine Aminomethylengruppe der Formel (IIb) 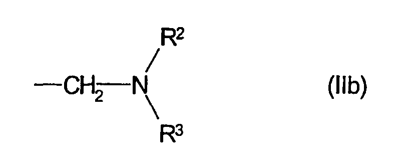
darstellt, worin
- R² und R³: die vorstehend genannten Bedeutungen haben, vorzugsweise Wasserstoff oder C₁-C₄-Alkyl,
oder in welcher
- T: die vorstehend genannte Bedeutung hat,
- g: eine Zahl von 1 bis 4 bedeutet, und
- A¹: eine Gruppe der Formel (IIc) 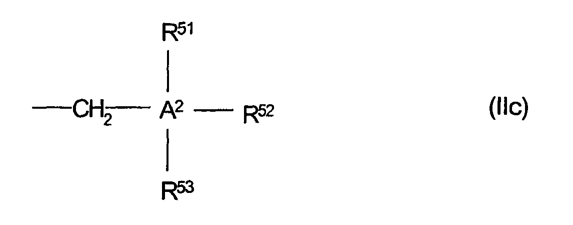
darstellt, worin
- A²: einen fünf- oder sechsgliedrigen aromatischen Ring oder einen kondensierten aromatischen Heterocyclus darstellt, welcher 1 bis 3 gleiche oder unterschiedliche Heteroatome aus der Gruppe Stickstoff, Sauerstoff und Schwefel enthält und der Heterocyclus über ein Kohlenstoffatom an die Methylengruppe gebunden ist,
- R⁵¹ und R⁵²: gleich oder verschieden sind und ein Wasserstoffatom, eine C₁-C₄-Alkyl-, eine C₁-C₄-Hydroxyalkyl- oder eine C₂-C₄-Alkylengruppe, vorzugsweise Wasserstoff, Methyl, Ethyl oder Hydroxyethyl, oder eine Arylgruppe bedeuten, wobei Aryl für unsubstituiertes oder für mit 1 bis 4 Resten aus der Gruppe C₁-C₆-Alkyl, Halogen, vorzugsweise F, Cl oder Br, C₁-C₆-Alkoxy, Cyan, CONH₂ und COOR⁵⁴, wobei R⁵⁴ Wasserstoff oder C₁-C₆-Alkyl bedeutet, substituiertes Phenyl steht,
- R⁵¹ und R⁵²: gemeinsam mit A² auch einen aliphatischen oder aromatischen Ring, vorzugsweise einen Phenylring, bilden können,
- R⁵³: ein Wasserstoffatom, eine C₁-C₄-Alkyl-, eine C₁-C₄-Hydroxyalkyl- oder eine C₂-C₄-Alkyenylgruppe bedeutet;
oder in welcher
- T: die vorstehend genannte Bedeutung hat,
- g: eine Zahl von 1 bis 4 bedeutet, und
- A¹: eine Gruppe der Formel (IId) 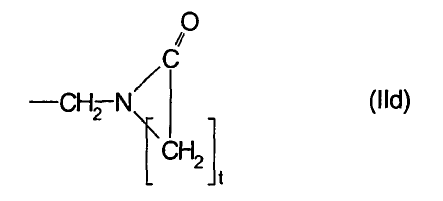
darstellt, worin
- t: eine Zahl von 3 bis 6, vorzugsweise 3, 4 oder 5 ist;
oder in welcher
- T: die vorstehend genannte Bedeutung hat und gegebenenfalls zusätzlich durch 1, 2 oder 3 Sulfonsäuregruppen substituiert sein kann,
- g: eine Zahl von 1 bis 4 bedeutet, vorzugsweise 1, 2 oder 3, und
- A¹: eine Phthalimidomethylengruppe der Formel (IIe) 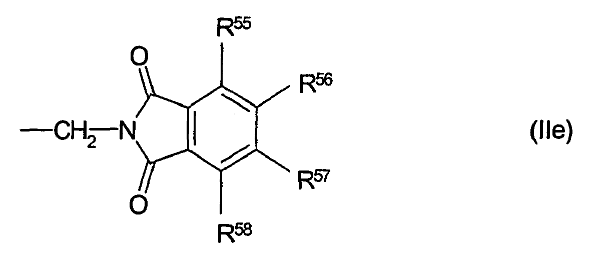
darstellt, worin
- R⁵⁵, R⁵⁷ und R⁵⁸: gleich oder verschieden sind und Wasserstoff, Fluor, Chlor oder Brom, vorzugsweise Wasserstoff, bedeuten
- R⁵⁶: Wasserstoff, Nitro, C₁-C₅-Alkyl, C₁-C₆-Alkoxy, Benzoylamino, Fluor, Chlor oder Brom, vorzugsweise Wasserstoff, bedeutet;
oder in welcher
- T: die vorstehend genannte Bedeutung hat,
- g: eine Zahl von 1 bis 4 bedeutet, und
- A¹: eine o-Sulfobenzoesäureimidomethylengruppe der Formel (IIf) 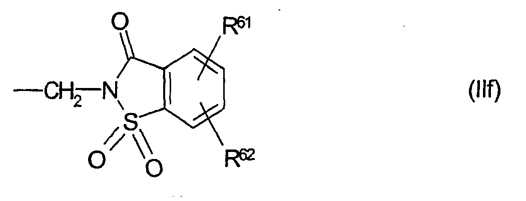
darstellt, worin
- R⁶¹ und R⁶²: gleich oder verschieden sind und Wasserstoff, Chlor, Brom, C₁-C₄-Alkyl, C₁-C₄-Alkoxy oder Nitro, vorzugsweise Wasserstoff, bedeuten;
oder in welcher
- T: die vorstehend genannte Bedeutung hat,
- g: eine Zahl von 1 bis 4 bedeutet, und
- A¹: eine Gruppe der Formel (IIg) 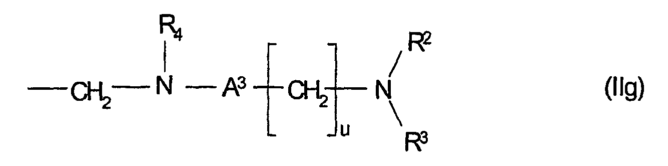
darstellt, worin
- A³: eine Carbonyl- oder Sulfonylgruppe, vorzugsweise eine Carbonylgruppe, ist,
- R², R³ und R⁴: die vorstehend genannte Bedeutung haben
- u: die Zahl 1 oder 2, vorzugsweise 1, ist;
oder in welcher
- T: die vorstehend genannte Bedeutung hat,
- g: eine Zahl von 1 bis 4 bedeutet, und
- A¹: eine Gruppe der Formel (IIh) 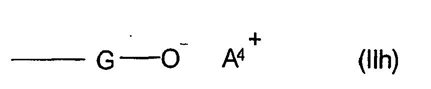
darstellt, worin
- G: die oben genannte Bedeutung hat, und
- A^{4 +}: ein Phosphoniumion; oder ein unsubstituiertes oder substituiertes Ammoniumion bedeutet.

Als substituiertes Ammoniumion kommt beispielsweise ein Ion der Formel

N+R⁹R¹⁰R¹¹R¹²

in Betracht, wobei die Substituenten R⁹, R¹⁰, R¹¹ und R¹² gleich oder verschieden sind und Wasserstoff, Phenyl, (C₁-C₄)-Alkylen-phenyl, C₅-C₃₀-Cycloalkyl, C₂-C₃₀-Alkenyl, oder verzweigtes oder unverzweigtes C₁-C₃₀-Alkyl bedeuten, wobei der Phenylring, die (C₁-C₄)-Alkylen-phenyl-Gruppe, die C₅-C₃₀-Cycloalkylgruppe, die C₂-C₃₀-Alkenylgruppe und die C₁-C₃₀-Alkylgruppe durch ein oder mehrere, z.B. 1, 2, 3 oder 4, Substituenten aus der Gruppe Cl, Br, CN, NH₂, OH, C₆H₅, mit 1, 2 oder 3 C₁-C₂₀-Alkoxyresten substituiertes C₆H₅, Carbamoyl, Carboxy, C₂-C₄-Acyl, C₁-C₈-Alkyl, NR²R³, wobei R² und R³ die oben genannte Bedeutung haben, und C₁-C₄-Alkoxy, z.B. Methoxy oder Ethoxy, substituiert sein können, oder die Alkylgruppe und die Alkenylgruppe perfluoriert oder teilfluoriert sein können;
oder
ein Rest der Formel (Ib) bedeuten,

-[X-Y]ₕ-R³ (Ib)

worin
- h: eine Zahl von 0 bis 100, vorzugsweise 0 bis 20, besonders bevorzugt 0,1, 2, 3, 4 oder 5;
- X: einen C₂-C₆-Alkylenrest, einen C₅-C₇-Cycloalkylenrest, oder eine Kombination dieser Reste ist, wobei diese Reste durch 1 bis 4 C₁-C₄-Alkylreste, Hydroxyreste, C₁-C₄-Alkoxyreste, (C₁-C₄)-Hydroxyalkylreste und/oder durch 1 bis 2 weitere C₅-C₇-Cycloalkylreste substituiert sein können, oder worin X, wenn h > 1 ist, auch eine Kombination der genannten Bedeutungen sein kann;
- Y: eine -O-, 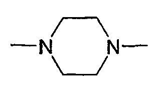 oder eine -NR²-Gruppe,
oder worin Y, wenn h > 1 ist, auch eine Kombination der genannten Bedeutungen sein kann;
- R³: die vorstehend genannte Bedeutung hat;
oder
wobei die Substituenten R⁹ und R¹⁰ zusammen mit dem N-Atom des Ammoniumions ein fünf- bis siebengliedriges gesättigtes oder ungesättigtes Ringsystem, das ggf. noch weitere Heteroatome aus der Gruppe O, S und N oder Carbonylgruppen enthält, bilden können, und das gegebenenfalls 1 oder 2 ankondensierte gesättigte, ungesättigte oder aromatische, carbocyclische oder heterocyclische Ringe trägt; wobei das Ringsystem und die ggf. ankondensierten Ringe durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert sein können,beispielsweise vom Pyrrolidon-, Imidazolidin-, Hexamethylenimin-, Piperidin-, Piperazin- oder Morpholin-Typ;
oder
wobei die Substituenten R⁹, R¹⁰ und R¹¹ zusammen mit dem N-Atom des Ammoniumions ein fünf- bis siebengliedriges aromatisches Ringsystem, das ggf. noch weitere Heteroatome aus der Gruppe O, S und N oder Carbonylgruppen enthält, bilden können, und das gegebenenfalls 1 oder 2 ankondensierte gesättigte, ungesättigte oder aromatische, carbocyclische oder heterocyclische Ringe trägt, wobei das Ringsystem und die ggf. ankondensierten Ringe durch 1, 2 oder 3 Reste aus der Gruppe OH, NH₂, Phenyl, CN, Cl, Br, C₁-C₄-Alkyl, C₁-C₄-Alkoxy, C₂-C₄-Acyl und Carbamoyl substituiert sein können, beispielsweise vom Pyrrol-, Imidazol-, Pyridin-, Picolin-, Pyrazin-, Chinolin- oder Isochinolin-Typ.

Als substituiertes Ammonium kommt ferner das 1/p Äquivalent eines Ammoniumions der Formel (Ic) in Betracht 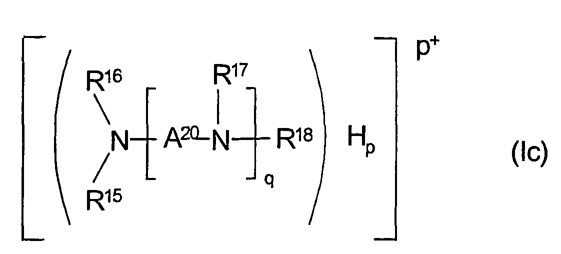 worin
- R¹⁵, R¹⁶, R¹⁷ und R¹⁸: unabhängig voneinander Wasserstoff oder eine (Poly)alkylenoxygruppe der Formel (Id) bedeuten;

-[(CH(R⁸⁰)-)ⱼO]ₖ-R⁸¹ (Id)

in der j die Zahl 2 oder 3 ist, k eine Zahl von 1 bis 100 ist, die Reste R⁸⁰ Wasserstoff, C₁-C₄-Alkyl oder, sofern k > 1 ist, eine Kombination davon bedeuten können und der Rest R⁸¹ Wasserstoff, C₁-C₄-Alkyl oder die Gruppe -(CH(R⁸²)- )ᵢNH₂ bedeutet, i die Zahl 2 oder 3 bedeutet und die Reste R⁸² Wasserstoff, C₁-C₄-Alkyl oder eine Kombination davon bedeuten;
- q: eine Zahl von 1 bis 10, vorzugsweise 1, 2, 3, 4 oder 5 ist;
- p: eine Zahl von 1 bis 5, wobei p ≤q+1 ist;
- A²⁰: einen verzweigten oder unverzweigten C₂-C₆-Alkylenrest bedeutet; oder worin A²⁰, wenn q > 1 ist, auch eine Kombination von verzweigten oder unverzweigten C₂-C₆-Alkylenresten sein kann.

Als substituiertes Ammoniumion kommt ferner ein sich von einer Polyaminoamido- oder Polyaminoverbindung ableitendes Ammoniumion in Betracht, das einen solchen Anteil an reaktionsfähigen Polyaminogruppen hat, dass der Aminindex zwischen 100 und 800 mg KOH pro g der Polyaminoamido- oder Polyaminoverbindung beträgt, wie es beispielsweise in der DE-A-27 39 775 offenbart wird.

Als substituiertes Ammoniumion kommt ferner ein Kation eines polymeren Ammoniumsalzes mit einem mittleren Molekulargewicht von 500 bis 2.500.000, das in Wasser oder in C₁-C₄-Alkohol löslich ist, wie es beispielsweise in der DE-A-42 14 868 offenbart wird, in Betracht.

Als substituiertes Ammoniumion kommt ferner das 1/r Äquivalent eines von einem Diamin abgeleiteten Ammoniumions der Formel (III) in Betracht 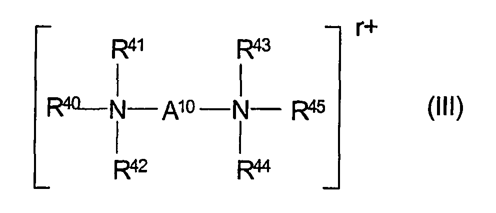 wie es beispielsweise in der WO 01/14479 offenbart wird,
und worin
- R⁴⁰: C₆-C₃₀-Alkyl, bevorzugt lineares C₈-C₂₀-Alkyl, oder C₆-C₃₀-Alkenyl, bevorzugt linear, bedeutet,
- R⁴¹: eine freie Valenz, Wasserstoff, C₁-C₃₀-Alkyl, C₂-C₃₀-Alkenyl, C₃-C₃₀-Cycloalkyl, C₆-C₁₄-Aryl oder C₇-C₃₈-Aralkyl bedeutet,
- R⁴², R⁴³ und R⁴⁵: gleich oder verschieden sind und C₁-C₆-Alkyl, bevorzugt Methyl, C₃-C₃₀-Cycloalkyl, C₆-C₁₄-Aryl oder C₇-C₃₈-Aralkyl bedeutet,
- R⁴⁴: eine freie Valenz, Wasserstoff, C₁-C₆-Alkyl, bevorzugt Methyl, C₃-C₃₀-Cycloalkyl, C₆-C₁₄-Aryl oder C₇-C₃₈-Aralkyl bedeutet,
mit der Maßgabe, dass R⁴¹ und R⁴⁴ nicht gleichzeitig eine freie Valenz bedeuten,
- r: die Zahl 2, oder für den Fall, dass R⁴¹ oder R⁴⁴ eine freie Valenz bedeutet, die Zahl 1 bedeutet,
- A¹⁰: C₁-C₁₂-Alkylen oder C₂-C₁₄-Alkenylen bedeutet, bevorzugt 2, 3 oder 4 C-Atome enthält, insbesondere 3;
oder
- R⁴¹ und R⁴³: zusammen mit den zwei Stickstoffatomen, an die sie geknüpft sind, und mit A¹⁰ einen Ring bilden, bevorzugt Piperazinyl;
und/oder
- R⁴⁴ und R⁴⁵: zusammen mit dem Stickstoffatom, an das sie geknüpft sind, einen Ring bilden, bevorzugt Piperidinyl, Morpholinyl, Piperazinyl oder N-(C₁-C₆-Alkyl)-piperazinyl.

Die in der Definition vor R⁴⁰ bis R⁴⁵ genannten Reste sind bevorzugt unsubstituiert oder sind mit Substituenten aus der Gruppe OH, C₁-C₆-Alkyl, bevorzugt Methyl, C₁-C₆-Alkoxy, CN und Halogen, besonders Chlor oder Brom, substituiert. Aryl bedeutet bevorzugt Phenyl, Aralkyl bevorzugt Benzyl oder 2-Phenylethyl und Cycloalkyl bevorzugt Cyclopentyl oder Cyclohexyl.
Bevorzugt sind solche Ionen der Formel (III), in der R⁴¹ und R⁴⁴ Wasserstoff und R⁴², R⁴³ und R⁴⁵ Methyl bedeuten, besonders bevorzugt solche Ionen der Formel (III), in der R⁴¹ bis R⁴⁵ Methyl bedeuten. Weiterhin bevorzugt sind solche Ionen der Formel (III), die sich von Aminen natürlicher Öle und Fette, wie Kokosöl, Maisöl, Getreideöl, Fisch- oder Walfischtran, besonders aus Talgfett, ableiten.

Bevorzugt ist A^{4 +} ein protoniertes tertiäres Amin, das aus Ölen und Fetten wie Talg, Kokosöl, Maisöl, Getreideöl, Fisch- oder Walfischtran gewonnen wurde, und ist beispielsweise Triisooctylamin, Dimethyltalgfettamin, Dimethylsojaamin, Dimethyloctadecylamin oder hydriertes Monomethyl-di(talgfettamin) oder ein alkoxyliertes Derivat eines Fettamins, beispielsweise Talgalkyldi(2-hydroxyethyl)amin, Polyoxyethylen(5)talgamin, Polyoxyethylen(8)oleylamin, N,N',N'-Tris(2-hydroxyethyl)-N-talg-1,3-diaminopropan, N,N',N'-Polyoxyethylen(12)-N-talg-1,3-diaminopropan;
oder A^{4 +} ist bevorzugt ein quaternäres Ammoniumion, das sich vorzugsweise von den aus obigen Ölen und Fetten gewonnen Aminen oder alkoxylierten Fettaminen ableitet, beispielsweise durch Methylierung oder durch Umsetzung mit Benzylchorid, und ist beispielsweise Stearylbenzyl- oder Cocosalkyl-dimethylbenzylammonium oder -2,4-dichlorbenzylammonium, Hexadecyl-, Stearyl-, Dodecyl- oder Cetyltrimethylammonium, Di-hydriertes Talgfettalkyl-, Dicocosalkyl- oder Distearyldimethylammonium, Oleyl- oder Kokos-di(2-hydroxyethyl)-methylammonium, hydriertes Polyoxyethylen(15)talgmethylammonium, N,N,N',N',N'-Pentamethyl-N-talg-1,3-propandiammonium, permethyliertes N-Stearyldiethylentriamin, permethyliertes N-Stearyltriethylentetramin, N-(3-Dodecyloxy-2-hydroxypropyl)octadecyldimethylammonium, Methyl-tri(2-octyl)ammonium, N,N-Di-(beta-stearoylethyl)-N,N-dimethylammonium, Laurylpyridinium, 2-Hydroxy-[5-chlor-, 5-isooctyl-, 5-t-butyl- oder n-nonyl-]1,3-xylylen-bispyridinium, 2-Methoxy-5-isooctyl-1,3-xylylen-bispyridinium, 2-Hydroxy-5-isooctyl-1,3-xylylen-bischinolinium, 2-Hydroxy-5-isooctyl-1,3-xylylen-bisisochinolinium oder Behenyltrimethylammonium;
oder A^{4 +} ist bevorzugt ein Phosphoniumion wie Hexadecyltributylphosphonium, Ethyltrioctylphosphonium oder Tetrabutylphosphonium;
wobei die ursprünglichen Anionen der eingesetzten quaternären Ammoniumverbindungen oder Phosphoniumverbindungen beispielsweise Halogenid, Sulfat, Alkoxysulfat, Alkoxyphosphat gewesen sein können.

Von besonderem Interesse sind weiterhin Pigmentdispergatoren der Formel (IIh), bei denen das dem Ammoniumion N⁺R⁹R¹⁰R¹¹R¹² zugrunde liegende Amin ein primäres oder sekundäres Amin, insbesondere Mischungen primärer und sekundärer Amine mit gegebenenfalls gemischten Kohlenwasserstoffresten natürlich vorkommender Öle und Fette wie Talg, Kokosöl, Maisöl, Getreideöl, Fisch- oder Walfischtran oder Holzharz, ist; konkret zu nennen sind beispielsweise Ammoniak, Methylamin, Triethylamin, Butylamine, Dibutylamine, Tributylamin, Hexylamine, Dodecylamin, Stearylamin, Diethylamin, Di-n-butylamin, Ethylendiamin, Anilin, N-Methylanilin, Benzylamin, Phenylethylamin, Cyclohexylaminoethylamin, 2-Cyclohexyl-aminopropylamin, 3-Stearylaminopropylamin, 2-Dimethylaminoethylamin, 2-Diethylaminoethylamin, 2-Dipropylaminoethylamin, 2-Dibutylaminoethylamin, 3-Dimethylaminopropylamin, 3-Diethylaminopropylamin, 3-Cyclohexylaminopropylamin, N-Methylpiperazin, N-Aminopropylmorpholin, N-Aminoethylpiperidin, N-Aminoethylpyrrolidin, N-Aminopropylpipecolin, 4-Diethylamino-1-methylbutylamin-(1), Lauryl-, Kokos- oder Talgfettamin, Lauryl-, Oleyl- oder Talgfettpropylendiamin, Talgfettdipropylentriamin, Talgfetttripropylentetraamin, 1,1,3,3-Tetramethylbutylamin, primäre Amine mit tertiären C₁₆-C₂₂-Alkylgruppen, N,N-Bis-aminopropyl-talgfettamin, 2-Ethylhexoxypropylamin oder Dehydroabietylamin.

Insbesondere bevorzugt sind Pigmentdispergatoren der allgemeinen Formel (II), worin A¹ eine Phthalimidomethylengruppe der Formel (IIe), eine Imidazolylmethylengruppe der Formel (IIc), eine Aminomethylen-, eine N-Methylaminomethylen-, eine N,N-Dimethylaminomethylen-, eine N-Ethylaminomethylen oder eine N,N-Diethylaminomethylengruppe der Formel (IIb), oder eine Ammoniumsulfonatgruppe der Formel (IIh) bedeutet.

Anionische Gruppen der als Hilfsmittel eingesetzten nichtpigmentären- und pigmentären Dispergatoren, Tenside oder Harze können auch verlackt werden, beispielsweise durch Ca-, Mg-, Ba-, Sr-, Mn- oder Al-lonen oder durch quaternäre Ammoniumionen. Dies kann vor oder nach dem Finish geschehen.

Mit Füllstoffe bzw. Extender sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Dabei hat sich die Zugabe besonders vor der Mahlung des Rohpigments oder vor der Pulverisierung der getrockneten Pigmentzubereitung bewährt.

Bewährt hat sich auch der Zusatz von geringen Mengen an Zusatzstoffen aus der Gruppe Phthalimid, Phthalsäureanhydrid, hydriertes Holzharz und Glycerylmonooleat bei der Mahlung.

Nach dem Finish kann die Suspension noch einer mechanischen oder thermischen Behandlung unterzogen werden, beispielsweise eine Dispergierung mittels einer Perlmühle oder, bevorzugt nach Entfernen des Lösemittels mittels Wasserdampfdestillation, die Zugabe von weiteren Hilfsmitteln oder das erwähnte Verlacken von anionischen Gruppen bei erhöhter Temperatur.

Die erfindungsgemäßen Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Elektretmaterialien, Farbfilter sowie von Tinten, Druckfarben und Saatgut.

Hochmolekulare organische Materialien, die mit den erfindungsgemäßen Pigmentzubereitungen pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.
Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen. Bezogen auf das zu pigmentierende, hochmolekulare organische Material setzt man die erfindungsgemäßen Pigmentzubereitungen in einer Menge von 0,05 bis 30 Gew.-%, vorzugsweise 0,1 bis 15 Gew.-%, ein.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Gegenstand der Erfindung ist weiterhin die Verwendung der erfindungsgemäßen Pigmentzubereitungen als Farbmittel für Drucktinten, insbesondere für Ink-Jet-Tinten.
Unter Ink-Jet-Tinten versteht man sowohl Tinten auf wässriger (einschließlich Mikroemulsionstinten) und nicht-wässriger ("solvent-based") Basis, UV-härtbare Tinten sowie solche Tinten, die nach dem Hot-Melt-Verfahren arbeiten.

Ink-Jet-Tinten auf Lösungsmittelbasis enthalten im wesentlichen 0,5 bis 30 Gew.-%, vorzugsweise 1 bis 15 Gew.-%, einer oder mehrerer der erfindungsgemäßen Pigmentzubereitungen, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid, Vinylchlorid/Vinylacetat-Copolymerisate, Polyvinylbutyrale, Wachs/Latex-Systeme oder Kombinationen dieser Verbindungen.
Gegebenenfalls können die lösungsmittelbasierenden Ink-Jet-Tinten noch Bindemittel und weitere Zusatzstoffe enthalten, wie z.B. Netzmittel, Entgaser/Entschäumer, Konservierungsmittel und Antioxidantien enthalten.

Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-%, einer oder mehrerer der erfindungsgemäßen Pigmentzubereitungen, 0,5 bis 95 Gew.-% Wasser und 0,5 bis 95 Gew.-% organische Lösungsmittel und/oder Grenzflächenvermittler.

UV-härtbare Tinten enthalten im wesentlichen 0,5 bis 30 Gew.-% einer oder mehrerer der erfindungsgemäßen Pigmentzubereitungen, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 und ca. 140°C liegt.
Hot-Melt-Ink-Jet-Tinten bestehen im wesentlichen aus 20 bis 90 Gew.-% Wachs und 1 bis 10 Gew.-% einer oder mehrerer der erfindungsgemäßen Pigmentzubereitungen. Weiterhin können 0 bis 20 Gew.-% eines zusätzlichen Polymers (als "Farbstofflöser"), 0 bis 5 Gew.-% Dispergiermittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein.

Die erfindungsgemäßen Drucktinten, insbesondere Ink-Jet-Tinten, können hergestellt werden, indem die erfindungsgemäßen Pigmentzubereitungen in das Mikroemulsionsmedium in das nicht-wässrige Medium oder in das Medium zur Herstellung der UV-härtbaren Tinte oder in das Wachs zur Herstellung einer Hot-Melt-Ink-Jet-Tinte eindispergiert wird. Zweckmäßigerweise werden die dabei erhaltenen Drucktinten für Ink-Jet-Anwendungen anschließend filtriert (z.B. über einen 1 µm Filter).
Weiterhin sind die erfindungsgemäßen Pigmentzubereitungen auch als Farbmittel für Farbfilter, sowohl für die additive wie auch für die subtraktive Farberzeugung, sowie als Farbmittel für elektronische Tinten ("electronic inks" bzw. "e-inks") oder "electronic paper" ("e-paper") geeignet.
Bei der Herstellung sogenannter Farbfilter, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD= Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die erfindungsgemäßen Pigmentzubereitungen zeichnen sich aus durch ihre hervorragenden coloristischen und rheologischen Eigenschaften, insbesondere Flockungsstabilität, Dispergierbarkeit, Rheologie, Glanz, Transparenz und Farbstärke. Sie sind in vielen Anwendungsmedien leicht und bis zu hohen Feinheiten dispergierbar. Solche Pigmentdispersionen zeigen hervorragende rheologische Eigenschaften selbst bei hoher Pigmentierung der Lack- und insbesondere der Druckfarbenkonzentrate. Mit ihnen lassen sich Lackierungen und insbesondere Drucke von hoher Farbstärke, hohem Glanz, hoher Transparenz und mit ausgezeichneten Echtheitseigenschaften erzielen.

Zur Beurteilung der Eigenschaften der Pigmente auf dem Lacksektor in wasserfreien, lösemittelbasierenden Lacksystemen wurden aus der Vielzahl der bekannten Lacke ein Alkyd-Melaminharz-Lack auf Basis eines mittelöligen Alkydharzes und eines butanolveretherten Melaminharzes (AM), ausgewählt.
Zur Beurteilung der Eigenschaften der Pigmente auf dem Lacksektor in wässrigen Lacksystemen wurde aus der Vielzahl der bekannten Lacksysteme ein wässriger Lack auf Polyurethanbasis (PUR) ausgewählt.

Zur Beurteilung der Eigenschaften der Pigmente auf dem Druckfarbengebiet wurden aus der Vielzahl der bekannten Drucksysteme ein Nitrocellulose-Alkohol-Tiefdrucksystem mit einer hohen Pigmentkonzentration von 28 Gew.-% Pigment, bezogen auf Mahlgut, beim Dispergieren zum Druckfarbenkonzentrat (NC-A-HK) gewählt.

Die Bestimmung der coloristischen Eigenschaften erfolgte nach DIN 55986. Die Bestimmung der Farbtiefe erfolgt im Vergleich zur 1/3 Standardfarbtiefe nach DIN 53235.
Die Rheologie des Mahlguts eines Lackes nach der Dispergierung (millbase-Rheologie) wurde visuell anhand der folgenden fünfstufigen Skala bewertet.
- 5: dünnflüssig
- 4: flüssig
- 3: dickflüssig
- 2: leicht gestockt
- 1: gestockt

Die Bestimmung der Überlackierechtheit erfolgte nach DIN 53221.
Die Bestimmung der Viskosität eines Lackes erfolgte nach dem Verdünnen des Mahlguts auf die Pigmentendkonzentration mit dem Viskospatel nach Rossmann, Typ 301 der Firma Erichsen.
In den folgenden Beispielen und Prüfvorschriften bedeuten Prozentangaben Gewichtsprozente und Teile Gewichtsteile, sofern nicht anders angegeben.

Prüfvorschriften zur Prüfung der dynamischen Viskosität und der Thixotropie im Mahlgut (Druckfarbenkonzentrat 28 gew.-%ig) und zur Bestimmung der 1/3 Standardfarbtiefe:

### a) Herstellung der 28 %igen Druckfarbenkonzentrate

In einen 250 ml PE-Plastikbecher ø 55 mm x 125 mm mit Steckdeckel werden 150 g Zirkoniummischoxidperlen (69% Zr0₂, 31 % amorphes SiO₂) mit Durchmesser 1,0 bis 1,25 mm eingefüllt und 28,00 g Pigmentzubereitung, 36,00 g Tiefdruckfirnis (1), bestehend aus 25,0 % Nitrocellulose A500 (nach ISO 14 446, Norm 27A) und 75,0 % Ethanol wasserfrei, und 36,00 g Lösemittelgemisch, bestehend aus 98,0 % Ethanol 99,9 %ig und 2,0 % Ethylacetat 99,9 %ig eingewogen. Die Mischung wird mit dem Disperser DAS 200 K der Firma LAU GmbH, Hemer, durch ellipsenförmige Schüttelbewegungen bei 660 U/min für 45 Minuten dispergiert (Lüftungsstufe 1, d.h. die Temperatur bei der Dispergierung steigt nicht über 40°C). Mit einem Sieb werden die Zirkoniummischoxidperlen abgesiebt.

### b) Bestimmung von Viskosität und Thixotropie der 28 %igen Druckfarbenkonzentrate

Die Dispergierkonzentrate werden 24 Stunden bei RT (21°C - 25°C) gelagert und vor der Messung für 30 Minuten bei 23°C temperiert. Viskosität und Thixotropie der Dispergierkonzentrate werden mit einem Rotationsviskosimeter Haake RS75 oder RS1 der Firma Haake, Karlsruhe, gemessen. Die Messgeometrie ist ein koaxiales Zylindersystem gemäß DIN 53019/ISO 3219. Während der gesamten Messung wird die Probe im Gerät bei (23 +- 0.1) °C temperiert. Es wird eine lineare Rampe des Geschwindigkeitsgefälles gefahren von 0 bis 250 sec⁻¹ in 180 sec mit mindestens 50 linear gestuften Messwerten, und im direkten Anschluss wieder eine lineare Rampe zurück von 250 auf 0 sec⁻¹ in 180 sec, mit weiteren mindestens 50 linear gestuften Messwerten. Der Viskositätswert wird im aufsteigenden Ast bei 200 sec⁻¹ durch Interpolation der Messpunkte ermittelt. Der Thixotropie-Wert wird als Differenz der Flächen unter den Kurven Schubspannung in Pa gegen Geschwindigkeitsgefälle in sec⁻¹, im aufsteigenden und im absteigenden Ast der Rampe, ermittelt und in Pa/sec angegeben.

### c) Ermittlung der zum Erreichen von 1/3 Standardfarbtiefe benötigten Pigmentkonzentration ausgehend von 28 %igen Druckfarbenkonzentraten

Das 28 %ige Druckfarbenkonzentrat (siehe Punkt a) wird mit einem Gemisch bestehend aus einem Teil Ethanol (wasserfrei) und einem Teil eines Tiefdruckfirnisses (2) (bestehend aus 30,0 % Nitrocellulose A 400 (65 %ig ethanolfeucht) nach ISO 14 446, Norm 30A, 4,0 % Genomoll 140 (Dibutylphthalat) 8,0 % 1-Methoxy-2-propanol und 58,0 % Ethanol wasserfrei) auf 10 % Pigmentkonzentration verschnitten. Mit dieser Druckfarbe wird mittels eines Klischees mit einer Gravurtiefe von 29 µm ein Druck erstellt und die Farbstärke im Vergleich zur 1/3 Standardfarbtiefe ermittelt. Dann wird die zum Druckfarbenkonzentrat zugegebene Menge Tiefdruckfirnis (3) (bestehend aus einem Teil Ethanol (wasserfrei) und einem Teil Tiefdruckfirnis (2), so lange erhöht, bis 1/3 Standardfarbtiefe erreicht ist. Dabei wird jeweils erneut von dem 28 %igen Druckfarbenkonzentrat ausgegangen.
Aus den eingesetzten Mengen errechnet sich die Pigmentkonzentration. Druckmaschine: Tiefdruck-Probedruckmaschine, Modell "Labratester",
Fa. N. Schläfli, CH-4800 Zofingen
Bedruckstoff: Algro Finess 80 g/m²
Druckgeschwindigkeit: 125 Skalenteile
Druckplatte: Klischee mit Gravurtiefe 29 µm.
Angaben zum 29 µm-Feld des gravierten Klischees:
X-Diagonale: 178 µm
y-Diagonale: 126 µm
Tiefe: 29 µm
Raster: 70 % Flächendeckung
Winkel: 30°
Volumenfläche: 11,8 ml/m²

### Beispiel 1

### A) Mahlung und saure Ausrührung

550 Teile Rohpigment P. Blue15, 550 Teile Natriumsulfat und 120 Teile Diethylenglykol werden in einer Schwingmühle 90 min mit Eisenstangen vermahlen. Das Mahlgut wird in 4000 Teilen 5 %iger wässriger Schwefelsäure für 2 h bei 90°C gerührt. Die Suspension wird filtriert und mit Wasser salzfrei gewaschen. Es werden 740,6 Teile 60,4 %igen Presskuchens des Präpigments erhalten.

### B) Finish

165,6 Teile Presskuchen 60,4 %ig, aus A) werden in 620 Teilen tert.-Amylalkohol und 350,2 Teilen Wasser suspendiert. Es werden 4,2 Teile Natriumhydroxid und 15,4 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest zugegeben und auf 150°C erhitzt. Bei 150°C wird 2 Stunden gerührt, dann wird der Amylalkohol abdestilliert, die Suspension filtriert, der Presskuchen salzfrei gewaschen. Man erhält 239 Teile Presskuchen 40,4 %ig der Phthalocyaninpigmentzubereitung.

### C) Trocknung

59 Teile eines Presskuchens aus B) werden bei 80°C getrocknet. Man erhält 23,8 Teile Phthalocyaninpigmentzubereitung.
Im AM-Lacksystem erhält man farbstarke, transparente und grünstichig-blaue Lackierungen, die Rheologie des Mahlguts des Lackes wird mit 5 bewertet, die Glanzmessung ergibt den Wert 77 und die Viskosität des Lackes beträgt 4,0 sec. Im PUR-Lacksystem sind die Lackierungen ebenfalls farbstark, transparent und grünstichig-blau, die Überlackierechtheit ist sehr gut und die Rheologie wird mit 3 bewertet.
Im NC-A-HK-Drucksystem werden farbstarke, transparente und grünstichig-blaue Drucke mit hohem Glanz erhalten, die Viskosität des Druckfarbenkonzentrats nach der Anreibung ist sehr niedrig.

### D) Nachbehandlung

79,7 Teile eines Presskuchens aus B) werden in 250 Teilen Wasser angeteigt und auf 80°C erwärmt. Es werden 7,7 Teile wässriger Presskuchen 32,4 %ig einer Kupferphthalocyaninsulfonsäure mit einem durchschnittlichen Substitutionsgrad von 1,5 Sulfonsäuregruppen pro Kupferphthalocyaninrest zugegeben und 1 Stunde bei 80°C gerührt. Die Suspension wird filtriert, der Presskuchen gewaschen und getrocknet. Man erhält 32,6 Teile Phthalocyaninpigmentzubereitung.
Im AM-Lacksystem erhält man farbstarke, transparente und grünstichig-blaue Lackierungen, die Rheologie des Mahlguts des Lackes wird mit 5 bewertet, die Glanzmessung ergibt den Wert 55 und die Viskosität des Lackes beträgt 3,3 sec.
Im NC-A-HK-Drucksystem werden farbstarke, transparente und grünstichig-blaue Drucke mit hohem Glanz erhalten, die Viskosität des Druckfarbenkonzentrats nach der Anreibung ist sehr niedrig.

### Messergebnisse

Die Tabelle zeigt die Messergebnisse für drei handelsübliche Produkte und für die Beispiele 1C und 1D:

| Pigment | Pigmentkonzentration bei 1/3 Standardfarbtiefe | Dyn. Viskosität bei Scherrate von 200 s⁻¹ [mPas] | Thixotropie [Pa/s] |
|---|---|---|---|
| Beispiel 1C | 6,2 Gew.-% | 128 | 345 |
| Beispiel 1D | 6,4 Gew.- | 80 | 17 |
| | | | |
| Handelsprodukt 1 | 6,2 Gew.-% | 229 | 1511 |
| Irgalite Blue GLVO | 6,0 Gew.-% | 263 | 2011 |

Das Handelsprodukt 1 wurde analog JP 57-12067 Beispiel 5 hergestellt. ®Irgalite Blue GLVO ist ein Produkt der Ciba Spezialitäten Chemie AG und ist eine Pigmentzubereitung enthaltend ein Kupferphthalocyanin und ein mit der Aminomethylengruppe der Formel (IIb) substituiertes Kupferphthalocyanin als Pigmentdispergator.

## Patentansprüche

1. Kupferphthalocyanin-Pigmentzubereitung, enthaltend ein Kupferphthalocyaninpigment und mindestens einen Pigmentdispergator aus der Gruppe der Kupferphthalocyaninsulfonsäuren und Kupferphthalocyaninsulfonsäuresalze, **gekennzeichnet durch**
a) eine dynamische Viskosität von höchstens 180 mPas, und/oder **durch** eine Thixotropie von höchstens 800 Pa/s, wobei die dynamische Viskosität und die Thixotropie mit einem Rotationsviskosimeter bei einer Temperatur von 23°C in einer Pigmentdispersion, bestehend aus 28 Gew.-% der Kupferphthalocyanin-Pigmentzubereitung (trocken), 9 Gew.-% Nitrocellulose (nach ISO 14 446, Norm 27A), 62,3 Gew.-% Ethanol und 0,7 Gew.-% Ethylacetat, bestimmt wird,
und **gekennzeichnet durch**
b) eine Farbstärke, die so hoch ist, dass eine Druckfarbe, bestehend aus einem Ethanol/Nitrocellulose-Tiefdruckfirnis (enthaltend 75 bis 85 Gew.-% Ethanol und 9 bis 11 Gew.-% Nitrocellulose nach ISO 14 446, Norm 27A und 30A im Verhältnis 2 zu 7,5) und einem Gehalt an Kupferphthalocyanin-Pigmentzubereitung (trocken), bezogen auf das Gesamtgewicht der Druckfarbe, von höchstens 6,6 Gew.-% die 1/3-Standardfarbtiefe nach DIN 53235 des entsprechenden Farbtones erreicht.

2. Kupferphthalocyanin-Pigmentzubereitung nach Anspruch 1, **gekennzeichnet durch** eine dynamische Viskosität von höchstens 150 mPas und/oder **durch** eine Thixotropie von höchstens 600 Pa/s.

3. Kupferphthalocyanin-Pigmentzubereitung nach Anspruch 1 oder 2, **gekennzeichnet durch** eine Farbstärke, die so hoch ist, dass eine Druckfarbe, bestehend aus einem Ethanol/Nitrocellulose-Tiefdruckfirnis (enthaltend 75 bis 85 Gew.-% Ethanol und 9 bis 11 Gew.-% Nitrocellulose nach ISO 14 446, Norm 27A und 30A im Verhältnis 2 zu 7,5) und einem Gehalt an Kupferphthalocyanin-Pigmentzubereitung (trocken), bezogen auf das Gesamtgewicht der Druckfarbe, von höchstens 6,5 Gew.-% die 1/3-Standardfarbtiefe nach DIN 53235 des entsprechenden Farbtones erreicht.

4. Kupferphthalocyanin-Pigmentzubereitung nach Anspruch 1, **gekennzeichnet durch**
a) eine dynamische Viskosität von höchstens 150 mPas, und **durch** eine Thixotropie von höchstens 450 Pa/s,
und **gekennzeichnet durch**
b) eine Farbstärke, die so hoch ist, dass eine Druckfarbe, bestehend aus einem Ethanol/Nitrocellulose-Tiefdruckfirnis (enthaltend 75 bis 85 Gew.-% Ethanol und 9 bis 11 Gew.-% Nitrocellulose nach ISO 14 446, Norm 27A und 30A im Verhältnis 2 zu 7,5) und einem Gehalt an Kupferphthalocyanin-Pigmentzubereitung (trocken), bezogen auf das Gesamtgewicht der Druckfarbe, von höchstens 6,4 Gew.-% die 1/3-Standardfarbtiefe nach DIN 53235 des entsprechenden Farbtones erreicht.

5. Kupferphthalocyanin-Pigmentzubereitung nach einem oder mehreren der Ansprüche 1 bis 4, **dadurch gekennzeichnet, dass** der Pigmentdispergator eine Verbindung der allgemeinen Formel (I) ist, 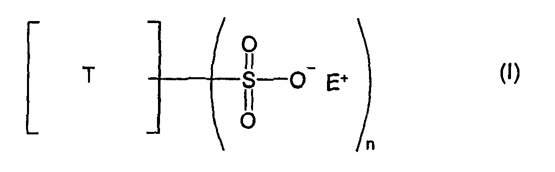 worin
T einen Kupferphthalocyaninrest darstellt, der mit 1 bis 4 Chloratomen substituiert oder vorzugsweise chlorfrei ist;
n eine Zahl von 1 bis 4 darstellt;
E⁺ H⁺ oder das Äquivalent M^{s+}/s eines Metallkations M^{s+} bedeutet, wobei s eine der Zahlen 1, 2 oder 3 ist.

6. Kupferphthalocyanin-Pigmentzubereitung nach einem oder mehreren der Ansprüche 1 bis 5, **dadurch gekennzeichnet, dass** das Kupferphthalocyaninpigment 0 bis 6 Gew.-% Chlor enthält.

7. Kupferphthalocyanin-Pigmentzubereitung nach einem oder mehreren der Ansprüche 1 bis 6, enthaltend 0,1 bis 25 Gew.-%, vorzugsweise 0,5 bis 20 Gew.-%, bezogen auf das Gewicht des Kupferphthalocyaninpigments, an Pigmentdispergatoren aus der Gruppe der Kupferphthalocyaninsulfonsäuren und deren Salze.

8. Verfahren zur Herstellung einer Kupferphthalocyanin-Pigmentzubereitung nach einem oder mehreren der Ansprüche 1 bis 7, **dadurch gekennzeichnet, dass** ein Kupferphthalocyanin-Rohpigment durch ein Verfahren aus der Gruppe Trockenmahlung und Salzknetung unter Bildung eines Präpigments feinverteilt wird und dann das Präpigment einer Finish-Behandlung in einer Mischung aus Wasser und einem organischen Lösemittel bei alkalischem pH, bei erhöhter Temperatur und in Gegenwart mindestens eines Pigmentdispergators aus der Gruppe der Kupferphthalocyaninsulfonsäuren und Kupferphthalocyaninsulfonsäuresalze unterzogen wird.

9. Verwendung einer Kupferphthalocyanin-Pigmentzubereitung nach einem oder mehreren der Ansprüche 1 bis 7 zum Pigmentieren von hochmolekularen organischen Materialien, beispielsweise von Kunststoffen, Harzen, Lacken, Anstrichfarben, elektrophotographischen Tonern und Entwicklern, Elektretmaterialien, Farbfilter sowie von Tinten, Druckfarben und Saatgut.

## Claims

1. A copper phthalocyanine pigment preparation comprising a copper phthalocyanine pigment and at least one pigment dispersant from the group of copper phthalocyaninesulfonic acids and copper phthalocyaninesulfonic salts, **characterized by**
a) a dynamic viscosity of not more than 180 mPas, and/or by a thixotropy of not more than 800 Pa/s, the dynamic viscosity and the thixotropy being determined with a rotational viscometer at a temperature of 23°C in a pigment dispersion consisting of 28% by weight of the copper phthalocyanine pigment preparation (dry), 9% by weight of nitrocellulose (according to ISO 14 446, standard 27A), 62.3% by weight of ethanol and 0.7% by weight of ethyl acetate, and **characterized by**
b) a color strength such that a printing ink consisting of an ethanol/nitrocellulose gravure varnish (containing 75% to 85% by weight of ethanol and 9% to 11% by weight of nitrocellulose according to ISO 14 446, standard 27A and 30A in a ratio of 2:7.5) and of a copper phthalocyanine pigment preparation (dry) content, based on the total weight of the printing ink, of not more than 6.6% by weight, achieves the 1/3 standard color depth according to DIN 53235 of the corresponding hue.

2. The copper phthalocyanine pigment preparation as claimed in claim 1, **characterized by** a dynamic viscosity of not more than 150 mPas and/or by a thixotropy of not more than 600 Pa/s.

3. The copper phthalocyanine pigment preparation as claimed in claim 1 or 2, **characterized by** a color strength such that a printing ink consisting of an ethanol/nitrocellulose gravure varnish (containing 75% to 85% by weight of ethanol and 9% to 11% by weight of nitrocellulose according to ISO 14 446, standard 27A and 30A in a ratio of 2:7.5) and of a copper phthalocyanine pigment preparation (dry) content, based on the total weight of the printing ink, of not more than 6.5% by weight, achieves the 1/3 standard color depth according to DIN 53235 of the corresponding hue.

4. The copper phthalocyanine pigment preparation as claimed in claim 1, **characterized by**
a) a dynamic viscosity of not more than 150 mPas, and by a thixotropy of not more than 450 Pa/s, and **characterized by**
b) a color strength such that a printing ink consisting of an ethanol/nitrocellulose gravure varnish (containing 75% to 85% by weight of ethanol and 9% to 11% by weight of nitrocellulose according to ISO 14 446, standard 27A and 30A in a ratio of 2:7.5) and of a copper phthalocyanine pigment preparation (dry) content, based on the total weight of the printing ink, of not more than 6.4% by weight, achieves the 1/3 standard color depth according to DIN 53235 of the corresponding hue.

5. The copper phthalocyanine pigment preparation as claimed in one or more of claims 1 to 4, wherein the pigment dispersant is a compound of the formula (I) 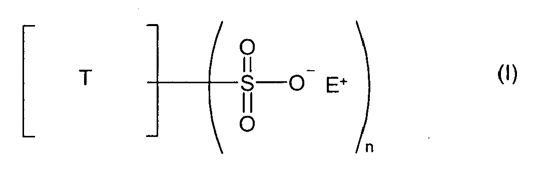 in which
T is a copper phthalocyanine radical which is substituted by 1 to 4 chlorine atoms or preferably is chlorine-free;
n is a number from 1 to 4;
E⁺ is H⁺ or the equivalent M^{s+}/s of a metal cation
M^{s+}, s being one of the numbers 1, 2 or 3.

6. The copper phthalocyanine pigment preparation as claimed in one or more of claims 1 to 5, wherein the copper phthalocyanine pigment contains 0% to 6% by weight of chlorine.

7. The copper phthalocyanine pigment preparation as claimed in one or more of claims 1 to 6, containing 0.1% to 25% by weight, preferably 0.5% to 20% by weight, based on the weight of the copper phthalocyanine pigment, of pigment dispersants from the group of copper phthalocyaninesulfonic acids and salts thereof.

8. A process for preparing a copper phthalocyanine pigment preparation as claimed in one or more of claims 1 to 7, which comprises finely dividing a crude copper phthalocyanine pigment by means of a method from the group of dry grinding and salt kneading to form a prepigment and then subjecting the prepigment to a finish treatment in a mixture of water and an organic solvent at alkaline pH, at elevated temperature and in the presence of at least one pigment dispersant from the group of copper phthalocyaninesulfonic acids and copper phthalocyaninesulfonic salts.

9. The use of a copper phthalocyanine pigment preparation as claimed in one or more of claims 1 to 7 for pigmenting high molecular weight organic materials, such as of plastics, resins, varnishes, paints, electrophotographic toners and developers, electret materials, color filters and of inks, including printing inks, and seed.

## Revendications

1. Préparation de pigments de phtalocyanine de cuivre, contenant un pigment de phtalocyanine de cuivre et au moins un agent dispersant les pigments du groupe des acides phtalocyaninesulfoniques de cuivre et des sels d'acide phtalocyaninesulfonique de cuivre, **caractérisée par**
a) une viscosité dynamique au maximum de 180 mPas, et/ou une thixotropie au maximum de 800 Pa/s, dans laquelle la viscosité dynamique et la thixotropie sont déterminées avec un viscosimètre en rotation à une température de 23 °C dans une dispersion pigmentaire, constituée de 28 % en poids de la préparation de pigments de phtalocyanine de cuivre (sèche), 9 % en poids de nitrocellulose (selon la norme ISO 14 446, Norm 27A), 62,3 % en poids d'éthanol et 0,7 % en poids d'acétate d'éthyle,
et **caractérisée par**
b) un pouvoir tinctorial, qui est si élevé, qu'une couleur d'impression, constituée d'un vernis d'impression en creux éthanol/nitrocellulose (contenant 75 à 85 % en poids d'éthanol et 9 à 11 % en poids de nitrocellulose selon la norme ISO 14 446, Norm 27A et 30A dans le rapport 2 à 7,5) et une teneur en préparation de pigments de phtalocyanine de cuivre (sèche), par rapport au poids total du colorant d'impression, au maximum de 6,6 % en poids, atteint la profondeur de teinte standard de 1/3 selon la norme DIN 53235 de la tonalité de couleur correspondante.

2. Préparation de pigments de phtalocyanine de cuivre selon la revendication 1, **caractérisée par** une viscosité dynamique au maximum de 150 mPas et/ou par une thixotropie au maximum de 600 Pa/s.

3. Préparation de pigments de phtalocyanine de cuivre selon la revendication 1 ou 2, **caractérisée par** un pouvoir tinctorial, qui est si élevé, qu'un colorant d'impression, constitué d'un vernis d'impression en creux éthanol/nitrocellulose (contenant 75 à 85 % en poids d'éthanol et 9 à 11 % en poids de nitrocellulose selon la norme ISO 14 446, Norm 27A et 30A dans le rapport 2 à 7,5) et une teneur en préparation de pigments de phtalocyanine de cuivre (sèche), par rapport au poids total du colorant d'impression, au maximum de 6,5 % en poids, atteint la profondeur de teinte standard de 1/3 selon la norme DIN 53235 de la tonalité de couleur correspondante.

4. Préparation de pigments de phtalocyanine de cuivre selon la revendication 1, **caractérisée par**
a) une viscosité dynamique au maximum de 150 mPas, et par une thixotropie au maximum de 450 Pa/s, et **caractérisée par**
b) un pouvoir tinctorial, qui est si élevé, qu'une couleur d'impression, constituée d'un vernis d'impression en creux éthanol/nitrocellulose (contenant 75 à 85 % en poids d'éthanol et 9 à 11 % en poids de nitrocellulose selon la norme ISO 14 446, Norm 27A et 30A dans le rapport 2 à 7,5) et une teneur en préparation de pigments de phtalocyanine de cuivre (sèche), par rapport au poids total du colorant d'impression, au maximum de 6,4 % en poids, atteint la profondeur de teinte standard de 1/3 selon la norme DIN 53235 de la tonalité de couleur correspondante.

5. Préparation de pigments de phtalocyanine de cuivre selon une ou plusieurs des revendications 1 à 4, **caractérisée en ce que** l'agent dispersant des pigments est un composé de formule générale (I), 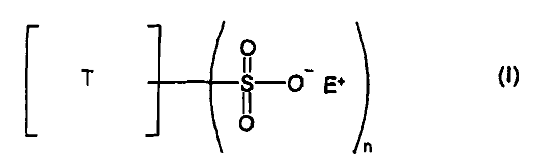 dans laquelle
T représente un radical phtalocyanine de cuivre, qui est substitué avec 1 à 4 atomes de chlore ou est de préférence exempt de chlore ;
n représente un nombre de 1 à 4 ;
E⁺ représente H⁺ ou l'équivalent M^{s+}/s d' un cation métallique M^{s+}, dans lequel s est un des nombres 1, 2 ou 3.

6. Préparation de pigments de phtalocyanine de cuivre selon une ou plusieurs des revendications 1 à 5, **caractérisée en ce que** le pigment de phtalocyanine de cuivre contient 0 à 6 % en poids de chlore.

7. Préparation de pigments de phtalocyanine de cuivre selon une ou plusieurs des revendications 1 à 6, contenant 0,1 à 25 % en poids, de préférence 0,5 à 20 % en poids, par rapport au poids du pigment de phtalocyanine de cuivre, d'agents dispersants les pigments du groupe des acides phtalocyaninesulfoniques de cuivre et de leurs sels.

8. Procédé de préparation d'une préparation de pigments de phtalocyanine de cuivre selon une ou plusieurs des revendications 1 à 7, **caractérisé en ce que** l'on divise finement un pigment brut de phtalocyanine de cuivre au moyen d'un procédé du groupe broyage à sec et malaxage avec un sel en formant un précurseur de pigment et ensuite ou soumet le précurseur de pigment à un traitement de finition dans un mélange d'eau et d'un solvant organique à un pH alcalin, à température élevée et en présence d'au moins un agent dispersant les pigments du groupe des acides phtalocyaninesulfoniques de cuivre et des sels d'acide phtalocyaninesulfonique de cuivre.

9. Utilisation d'une préparation de pigments de phtalocyanine de cuivre selon une ou plusieurs des revendications 1 à 7 pour la pigmentation de matériaux organiques de masse moléculaire élevée, par exemple de substances synthétiques, de résines, de vernis, de peintures, de toners et révélateurs électro-photographiques, de matériaux d'électrets, de filtres colorés et d'encres, de colorants d'impression et de semences.
